# EUROPÄISCHE PATENTSCHRIFT

(11) **EP 1 488 721 B1**
(45) Veröffentlichungstag und Bekanntmachung des Hinweises auf die Patenterteilung: **17.08.2005**
(21) Anmeldenummer: 03291476.4
(22) Anmeldetag: 18.06.2003
(51) Int. Cl.: A47J 37/12

(54) **Wannenartige Behälter für ein Gargerät und Gargerät**
Well-like container for a fryer and fryer
Récipient en forme de cuve pour une friteuse et friteuse

(43) Veröffentlichungstag der Anmeldung: 22.12.2004
(73) Patentinhaber: FRIMA S.A., 68271 Wittenheim Cedex (FR); Rational AG, 86899 Landsberg/Lech (DE)
(72) Erfinder: Michineau, Serge, 68190 Ensisheim (FR); Wiedemann, Peter, 86836 Klosterlechfeld (DE)
(74) Vertreter: Weber-Bruls, Dorothée, Dr.

(56) Entgegenhaltungen:
- DE-A- 19 907 150
- GB-A- 2 363 447
- US-A- 3 964 378
- US-A1- 2003 070 557

## Beschreibung

Die Erfindung betrifft ein Gargerät mit einem wannenartigen Behälter nach dem Oberbegriff von Anspruch 1.

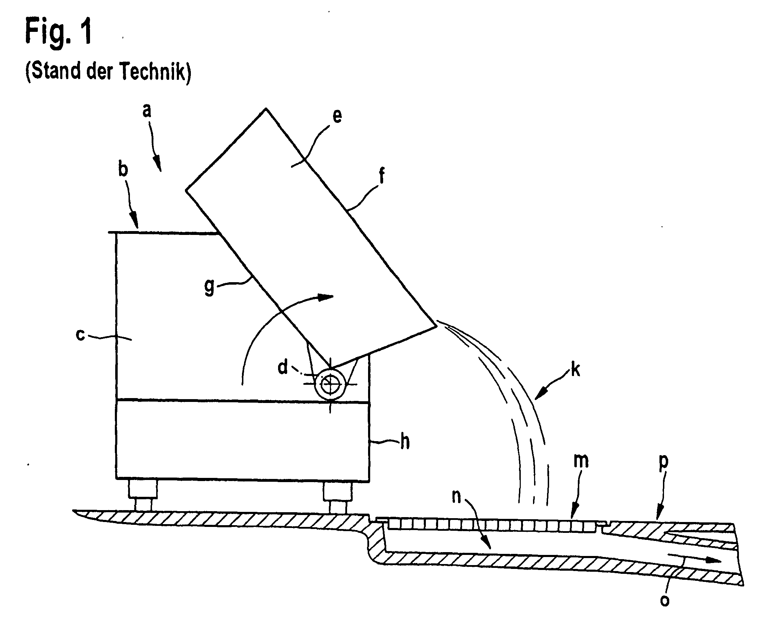

Die Erfindung geht von einem Gargerät bzw. einem wannenartigen Behälter eines Gargeräts aus, das von der Anmelderin unter der Bezeichnung "ThermoJet" vertrieben wird. Der prinzipielle Aufbau dieses Gargeräts ist in der beiliegenden Figur 1 dargestellt. Das Gargerät a umfaßt einen Trägerblock **b**, der eine im wesentlichen rechteckige Aussparung **c** aufweist, in der um eine Drehachse **d** schwenkbar ein wannenartiger Behälter **e** gelagert ist. Der wannenartige Behälter **e**, der auch als Tiegel bezeichnet werden kann, besitzt im mittigen Querschnitt unter geometrischer Berücksichtigung der offenen oberen Seite **f** einen rautenförmigen Querschnitt. Eine Heizeinrichtung (nicht detailliert dargestellt) ist unterhalb des Bodenbereichs **g** des Tiegels angeordnet.

In dem Tiegel können jegliche Art von Gargütern, wie Fleischstücke, Gemüse, oder andere in einer Flüssigkeit zu garende Lebensmittel, erwärmt und zubereitet werden. Nach dem Garvorgang wird der Tiegel mit Reinigungswasser ausgewaschen. Zum Entleeren wird der Tiegel um die Schwenkachse **d** hin zur Stirnseite **h** des Gargeräts **a** geschwenkt. Das ausgeschüttete Reinigungswasser **k** gelangt über ein Trittrost **m** in einen Kanal **n**, über den die verschmutzte Reinigungsflüssigkeit in den Abfluß gelangt, der mit dem Pfeil **o** angedeutet ist. Der Trittrost **m** ist derart in dem Boden **p** der Küche eingelassen, daß dessen Oberseite mit dem Boden eine kontinuierliche, ebene Fläche bildet.

Diese bekannte Maßnahme zum Entsorgen des Reinigungswassers bedarf eines aufwendigen, in dem Boden der Küche einzubauenden Ablaufrinnensystems, das an das Abwasserkanalsystem des Gebäudes anzuschließen ist. Zudem birgt der Ausschüttvorgang des meist sehr heißen Reinigungswassers die Gefahr des Verbrühens einer Bedienperson und/oder des Verunreinigens benachbarter Gegenstände in sich. Üblicherweise weist die Reinigungsflüssigkeit einen nicht vernachlässigbaren Fettgehalt auf, der durch das Ausschütten am Gitterrost einen Schmierfilm hinterlassen kann, wodurch eine Ausrutschgefahr an dem Arbeitsbereich einer Bedienperson neben dem Gargerät besteht. Schließlich ist zum Ausschütten der Reinigungsflüssigkeit, nämlich zum Verschwenken des schweren Tiegels samt dem Inhalt ein hoher Kraftaufwand aufzubringen. Hierfür sind entweder eine außerordentlich leistungsstarke Antriebseinheit, eine starke Handkraft oder ein mechanisch aufwendiges Übersetzungsgetriebe vorzusehen, mit dem der Krafteinsatz zum Kippen des Tiegels gering gehalten werden soll.

Die JP 57005676 offenbart eine pfannenartige Kocheinrichtung, die mittels einer hydraulischen Einrichtung gekippt werden kann, um heißes Wasser aus dem pfannenartigen Behälter über eine Auslaßöffnung abgießen zu können.

Die US 2003/070557 A1 offenbart ein gattungsgemäßes Gargerät mit einem wannenartigen Behälter, in welchem Lebensmittel gegart werden können. Der Behälter umfaßt einen Bodenbereich, an dem eine Öffnung vorgesehen ist, über die fließfähige Substanzen aus dem Behälter abgegeben werden können. Ferner ist eine Entleerungsvorrichtung vorgesehen, durch die die Öffnung freigebbar oder verschließbar ist. Auch wird eine Aufnahmeeinrichtung für die abgeflossene Substanz unterhalb des Behälters bereitgestellt, der mit der Aufnahmeeinrichtung über eine Leitung fluidal gekoppelt ist.

Aus der GB 2,363,447 A ist ebenfalls ein Gargerät mit einem wannenartigen Behälter bekannt, wobei dieser Behälter eine Öffnung im Bodenbereich desselben aufweist, über die fließfähige Substanzen abgegeben werden können. Ein Verschließmechanismus dient zum Freigeben oder Verschließen der Öffnung.

Die DE 199 07 150 A1 offenbart ein Bottichgerät zum Garen von Nahrungsmitteln mit einer Ventil-gesteuerten Abflußeinrichtung aus dem Bodenbereich des Bottichgeräts, wobei die im Bodenbereich des Bottichgeräts angeordnete Abflußeinrichtung ausgestattet ist mit einem motorisch zu öffnenden und zu schließenden Ventilsystem und wobei eine mit Ansteuerkriterien beaufschlagbare Ansteuerschaltung ansteuertechnisch mit dem Ventilmotor verbunden ist.

Die US 3,964,378 A1 offenbart ein Pfannengarsystem mit einem Neigemechanismus, um die Pfanne zu drehen und Garflüssigkeit oder Reinigungswasser über ein Ausgußmundstück zu entfernen.

Es ist Aufgabe der Erfindung, den Verletzungsgefahren, die im kausalen Zusammenhang mit dem Entleeren eines wannenartigen Behälters eines Gargeräts stehen, zu begegnen, wobei die konstruktiven Maßnahmen einfach und der ergonomische Aufwand zum Entleeren des wannenartigen Behälters möglichst gering sein sollen.

Diese Aufgabe wird durch die in Patentanspruch 1 angegebenen Merkmale gelöst. Danach ist ein Gargerät mit einem wannenartigen Behälter vorgesehen, der einen Bodenbereich, eine Wand und eine dem Bodenbereich gegenüberliegende offene Seite aufweist, über die Gargüter, Garflüssigkeiten, Reinigungsflüssigkeiten und dergleichen in den wannenartigen Behälter eingebracht werden können. Um den Garvorgang beschleunigen zu können, kann die offene Seite des erfindungsgemäßen Behälters mit einem Deckel verschlossen sein. Auch ist der wannenartige Behälter mit einer oder mehreren Öffnungen am oder im Bodenbereich, vorzugsweise am Übergang vom Bodenbereich in eine Seitenwand, versehen, über welche Öffnung eine fließfähige Substanz abfließen kann. Als fließfähige Substanz kann sowohl ein fertig gegartes fließfähiges Gericht, das auch Festkörperbestandteile aufweisen darf, wenn die Öffnung für derartige Festkörperbestandteile entsprechend bemessen ist, als auch eine Reinigungsflüssigkeit verstanden werden. Desweiteren ist erfindungsgemäß ein Verschließmechanismus vorgesehen, durch den die Öffnung zumindest teilweise, vorzugsweise vollständig, freigegeben oder dicht verschlossen werden kann. Dabei ist eine Auffang- und Sammeleinrichtung für die abgeflossene Substanz unterhalb des Behälters angeordnet, der mit der Auffang- und Sammeleinrichtung über eine Leitung fluidal gekoppelt ist. Erfindungsgemäß ist zudem vorgesehen, daß die Leitung im wesentlichen koaxial zu einer Schwenkachse des Behälters liegt.

Üblicherweise ist die Öffnung während eines Garvorgangs im Behälter zu schließen, damit ein ungewollter Flüssigkeitsverlust aus dem wannenartigen Behälter vermieden werden kann. Allerdings kann auch während des Garvorgangs ein Ablassen von Flüssigkeit wünschenswert sein, wenn die Flüssigkeitskonzentration oder die Konzentration der fließfähigen Substanz nicht der entspricht, die der Koch als zum Garen geeignet ansieht. Schließlich ist ein freigebender Verschließmechanismus insbesondere nützlich, um eine verbrauchte Reinigungsflüssigkeit nach dem Reinigen ablassen zu können.

Mit den erfindungsgemäßen Maßnahmen stellt der Kippmechanismus am wannenartigen Behälter keine zwingende strukturelle Vorraussetzung für das Gargerät mehr dar. Desweiteren kann ein Entleeren des erfindungsgemäßen Behälters ohne hohen Kraftaufwand erreicht werden, indem der Verschließmechanismus entweder manuell, elektrisch oder mechanisch, pneumatisch, hydraulisch oder auf eine andere Weise betätigt wird. Schließlich braucht eine mit dem erfindungsgemäßen Garbehälter ausgestattete Küche nicht mehr mit einem Ablaufkanalsystem für verbrauchtes Reinigungswasser ausgebaut sein. Vielmehr kann die Öffnung am Bodenbereich des Garbehälters an einen in jeder Küche vorgesehenen Waschbeckenabfluß angeschlossen werden.

Um beispielsweise dem Garbehälter fließfähige Garsubstanzen unter Umständen zur weiteren Verarbeitung oder zum Anrichten der gegarten Speise vorzugsweise in bestimmten Dosen oder Portionen entnehmen zu können, kann dies auch über die Bodenöffnung geschehen, die dazu an eine die Öffnung mit dem Ort der weiteren Speisenbereitung verbindende Zuführleitung gekoppelt ist. Im Verlauf dieser Leitung kann eine Pumpe oder ein anderer Förderer für die fließfähige Substanz angeordnet sein, der insbesondere derart ansteuerbar ist, daß der gewünschte Durchsatz zur Stelle der weiteren Speisenbereitung gelangen kann.

Um insbesondere die bereits bestehenden Gargeräte der Anmelderin entsprechend dem erfindungsgemäßen Gargerät weiterbilden zu können, ist die Öffnung am Bodenbereich nahe der Tiegel-Schwenkachse anzuordnen. Durch leichtes Ankippen des Behälters sammelt sich der Rest der noch nicht durch die Öffnung abgeflossenen Substanz an der Öffnung, um dort abfließen zu können.

Um einen kontinuierlichen Durchsatz der fließfähigen Substanz durch die Öffnung hindurch zu gewährleisten, kann dieser bei einer weiteren Ausführung der Erfindung mit einem Filter versehen sein. Dieser Filter ist vorzugsweise dem Verschließmechanismus in Abflußrichtung vorgeschaltet, damit die den Verschließmechanismus bildende Mechanik nicht durch größere Garstücke blockiert oder verschmutzt werden kann. Um eine ausreichende Festigkeit dem Filter zu verleihen, ist letzterer als Grill ausgeführt, der insbesondere zwei Stäbe aufweist, die vorzugsweise in einem rechten Winkel zueinander angeordnet sind.

Bei einer bevorzugten Ausführung der Erfindung wird der Verschließmechanismus von einem Sensor betriebsmäßig abgetastet, der zumindest die Schließstellung des Verschließmechanismus detektieren kann. Auf diese Weise kann dem Koch zu jeder Zeit des Garvorgangs signalisiert werden, ob sich der Verschließmechanismus in der zumeist gewünschten geschlossenen Stellung befindet.

In einer weiteren bevorzugten Ausführung der Erfindung ist der wannenartige Behälter mit einer Einrichtung zum Steuern des Verschließmechanismus ausgestattet. Die Steuereinrichtung kann hauptsächlich dazu ausgelegt sein, sicherzustellen, daß der Verschließmechanismus während eines Garvorgangs in dem Behälter geschlossen bleibt und/oder daß die Öffnung am Bodenbereich nur dann geöffnet werden kann, wenn ein Reinigungsvorgang am Behälter durchgeführt wird oder abgeschlossen wurde.

Bei einer vorteilhaften Ausgestaltung der Erfindung ist eine Regeleinrichtung vorgesehen, welche die Menge der abfließenden fließfähigen Substanz aus dem Behälter einstellen kann. Auf diese Weise kann die Flüssigkeitskonzentration oder die Konzentration von fließfähigen Substanzen in dem wannenartigen Behälter auch während des Garvorgangs von dem Koch verändert werden. Dabei kann der Koch den Verschließmechanismus entweder manuell öffnen, oder ein Fühler mißt die Konzentration der Flüssigkeit bzw. der fließfähigen Substanz, welches Meßergebnis die Regeleinrichtung nutzt, um gegebenenfalls überschüssige fließfähige Garsubstanzen oder überschüssiges Reinigungswasser aus dem wannenartigen Behälter abzulassen.

Bei einer besonderen Ausgestaltung ist der Verschließmechanismus stromabwärts von der Öffnung am Bodenbereich angeordnet. Der Verschließmechanismus kann vorzugsweise einen verschiebbaren Kolben in einer insbesondere zylindrischen Kolbenaufnahme umfassen. Die Kolbenaufnahme ist an dem stromaufwärts liegenden, die Öffnung definierenden Bereich des Bodens des wannenartigen Behälters angeschlossen. Insbesondere eine einstückige Ausbildung der Kolbenaufnahme mit dem Bodenbereich kann insofern von Vorteil, als sich der Einsatz von Dichtungen erübrigt und keine komplexe Montage von Dichtungen anfällt. Sollte eine einstückige Ausbildung von Bodenbereich und Verschließmechanismus fertigungstechnisch unerwünscht sein, kann letzterer an den Bodenbereich geschweißt sein.

Der Kolben des Verschließmechanismus ist derart verschiebbar in der Kolbenaufnahme angeordnet, daß ein durch den Bodenöffnungsbereich des wannenartigen Behälters definierter Durchlaß entweder vollständig offen, teilweise offen oder vollständig von dem Kolben dichtend bedeckt ist. Mit dem insbesondere stufenartig oder kontinuierlich verstellbaren Kolben kann der Abfluß der fließfähigen Substanz entsprechend einer speziellen Kolbenstellung verstärkt oder abgeschwächt werden. Die Stellung des Kolbens kann beispielsweise durch die Steuereinrichtung kontrolliert werden.

Um den Kolben entweder stufenweise oder kontinuierlich in die verschiedenen Stellungen, insbesondere in die geschlossene und die vollständig geöffnete Stellung, zu bringen, ist eine Antriebseinheit vorgesehen, die eine Rotationsbewegung in eine Translationsbewegung umwandelt, welche die Verschiebung des Kolbens veranlaßt. Hierbei kann vorzugsweise eine Schraubenanordnung vorgesehen sein, wobei insbesondere ein elektrischer Motor die Schraubenanordnung in Drehung versetzt. Die Schraubenanordnung umfasst eine drehbar und verschiebbar gelagerte Langschraube, die mit einer ortsfesten Antriebsschraube eines Motors in Gewindeeingriff kommt und entsprechend ihrer Gewindeganghöhe und mitgeteilten Umfangsgeschwindigkeit vor- und zurückgetrieben werden kann.

In einer Weiterbildung der Erfindung können mehrere Auffangbehälter für verschiedenste fließfähige Substanzen, wie fließfähige gegarte Lebensmittel oder Reinigungsflüssigkeiten, an die Öffnung des wannenartigen Behälters angeschlossen sein, um die abgelassene Substanz auffangen zu können.

Bei einer besonderen Ausführung der Erfindung ist stromabwärts der Öffnung im Bodenbereich eine Anschlußgruppe oder -batterie angeordnet, von der jeder Anschluß in unterschiedliche Leitungssysteme mündet, welche mit einem Auffangbehälter verbunden sein oder zu einem externen Bereich, wie einem weiteren Gargerät, zum weiteren Bereiten und Anrichten von Gargütern führen kann oder an Abflußkanalsysteme anschließbar sind. Diese Gruppe von Anschlüssen weist einen Haupteingangsanschluss auf, der einerseits stets mit der Öffnung im Bodenbereich verbunden ist und andererseits mit jedem der Ausgangsanschlüsse fluidal koppelbar ist. Durch Stellen der Anschlußgruppe kann der Koch die Öffnung im Bodenbereich des Behälters mit einem bestimmten Leitungssystem verbinden, um die fließfähige Substanz zu einem gewünschten externen Ort fördern zu können.

Bei einer weiteren Ausführung der Erfindung ist der wannenartige Behälter über die Öffnung mit einer Pumpe fluidal verbunden, um die abzulassende, fließfähige Substanz an einen über dem Niveau der fließfähigen Substanz in dem wannenartigen Behälter befindlichen Ort transportieren zu können. Hierbei kann auch eine umgekehrte Förderrichtung in Betracht kommen, nämlich einen Transport eines fließfähigen Guts in den wannenartigen Behälter.

Desweiteren betrifft die Erfindung ein Gargerät mit dem oben beschriebenen wannenartigen Behälter sowie den dazu gehörigen Einrichtungen und konstruktiven Maßnahmen.

Weitere Vorteile, Merkmale und Eigenschaften der Erfindung werden durch die folgende Beschreibung einer bevorzugten Ausführung mit Bezug auf die beiliegenden Zeichnungen deutlich, in denen zeigen:
- Fig. 2: eine perspektivische Rückansicht einer Ausführung des erfindungsgemäßen wannenartigen Behälters;
- Fig. 3: eine perspektivische Vorderansicht des wannenartigen Behälters gemäß Fig. 2;
- Fig. 4: eine Seitenansicht eines Gargeräts mit dem in einer Schnittansicht dargestellten wannenartigen Behälter gemäß Fig. 2;
- Fig. 5: eine Vorderansicht des erfindungsgemäßen Gargeräts gemäß Fig. 4;
- Fig. 6: eine Querschnittsansicht eines an den wannenartigen Behälter montierten Verschließmechanismus; und
- Fig. 7: eine perspektivische Ansicht eines in die Öffnung des Bodens des wannenartigen Behälters einzusetzenden Filters.

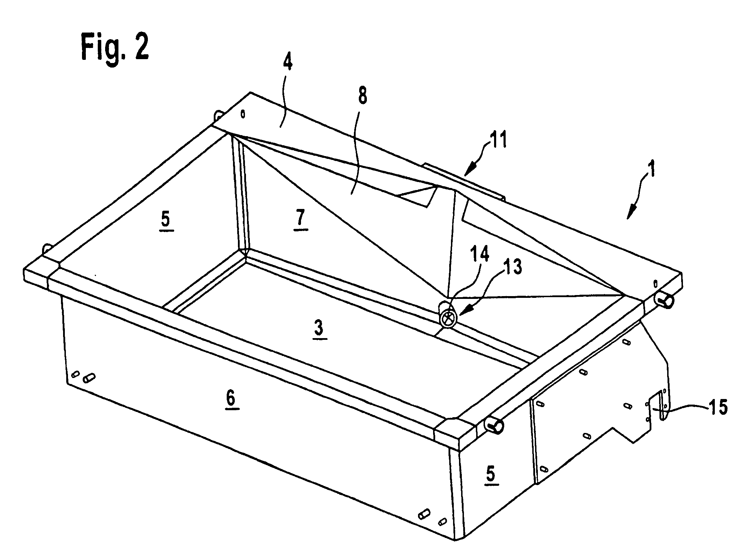

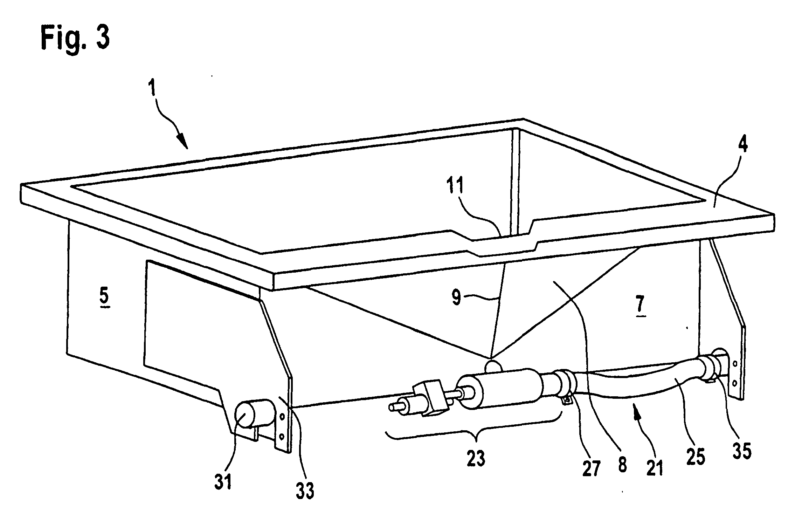

In den Fig. 2 und 3 ist ein wannenartiger Behälter 1 für ein erfindungsgemäßes Gargerät dargestellt, der einen Bodenbereich 3, Seitenwände 5, eine Rückwand 6 und eine Stirnwand 7 aufweist. Die dem Bodenbereich 3 gegenüberliegende, obere Seite des wannenartigen Behälters ist vollständig offen ausgeführt, wobei am freien Rand der Stirnwand 7 ein Schutzblech 4 befestigt ist, das ein Überschwappen einer in dem Behälter enthaltenen Flüssigkeit verhindern soll und dessen Breite hin zur Mitte der Stirnwand leicht abnimmt. Über die offene Seite des Behälters 1 können Flüssigkeiten und Gargüter dem Behälter 1 zugeführt werden. Der Behälter 1 weist im wesentlichen eine Quaderform auf. Die Stirnwand 7 ist an deren oberen Rand mit einem Ausgußschnabel 11 versehen, an dessen Bereich das Schutzblech 4 einen Durchlaß (Fig.2) oder derart ausgeführt ist (Fig.3), daß ein stufenfreier Übergang von der Stirnwand 7 zum Ausgußschnabel 11 bereitgestellt wird.

Die Stirnwand 7 weist einen trichterförmigen Abschnitt 8 mit einem zu eines Mittelfalz 9 hingerichteten Quergefälle auf. Der trichterförmige Abschnitt 8 ist weiterhin auch zu einer Vertikalen geneigt, wodurch sich beim Kippen des Behälters 1. die Flüssigkeit im Bereich der Mittelfalz 9 zum Schnabel 11 leitend sammelt und ausgegossen werden kann.

Am Übergangsbereich von Boden 3 und Stirnwand 7 in Verlängerung zum Mittelfalz 9 ist eine Öffnung 13 vorgesehen, über die eine fließfähige Substanz (nicht dargestellt) in dem Behälter 1 abgelassen werden kann. In der Öffnung 13 ist ein grillartiger Filter 14 eingesetzt, um die Öffnung 13 und das darin anschließende Leitungssystem vor groben Verunreinigungen zu schützen.

Der Behälter 1 weist an seinem unteren stirnwandseitigen Eckbereich ein paar Lageraufnahmen 15 auf, in die ein Drehlagerzapfen eingreifen kann, der an einer Trägerstruktur (in den Fig. 2 und 3 nicht dargestellt) befestigt ist.

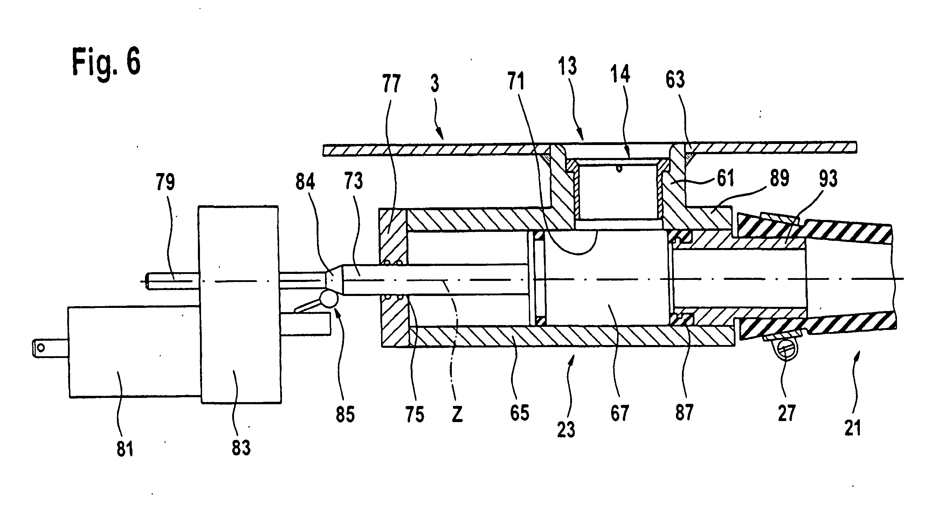

In Fig. 3 ist die Stirnwand 7 des Behälters 1 von außen ersichtlich. An der Öffnung ist ein Leitungssystem 21 angeschlossen, wobei unmittelbar außerhalb des Behälters 1 ein Verschließmechanismus 23 mit der Öffnung fluidal in Verbindung steht. Der detaillierte Aufbau des Verschließmechanismus 23 wird insbesondere mit Bezug auf Fig. 6 beschrieben. An den Verschließmechanismus 23 ist ein Schlauch 25 über eine Schlauchklemme 27 befestigt. Bei dem in Fig. 3 gezeigten wannenartigen Behälter 1 ist ein Zapfen 31 zur kippbaren Lagerung des Behälters an der Außenseite eines die Seitenwand 5 verlängernden Abschnitts 33 angeordnet. Der Zapfen 31 kann hohl ausgeführt sein, und der Schlauch 25 ist über den Zapfen gesteckt und mittels einer Schlauchschelle 35 festgelegt. An der freien Endseite des Zapfens 31 kann ein Leitungsstück (in Fig.3 nicht dagestellt) angeschlossen werden, das die abfließenden Flüssigkeit von dem Behälter 1 weg durch den Zapfen 31 hindurch leitet.

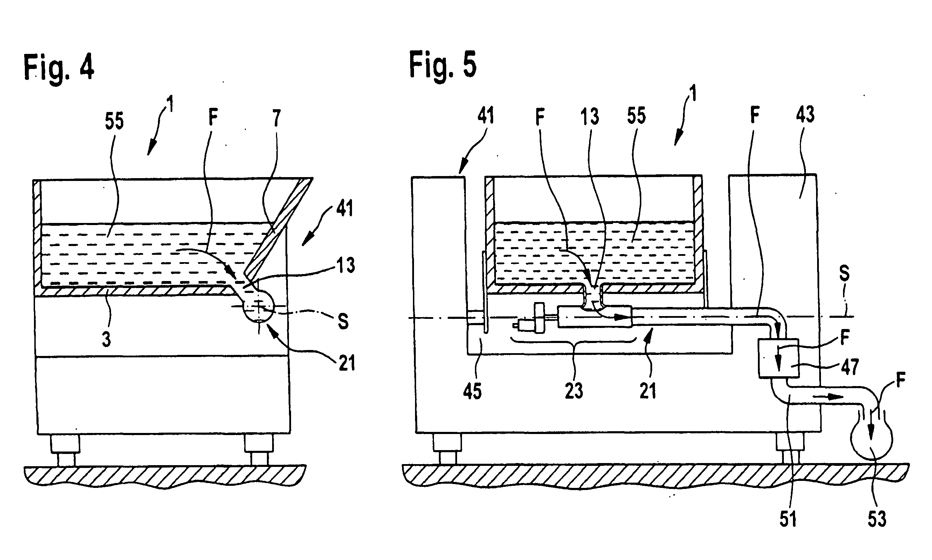

In den Fig. 4 und 5 ist ein erfindungsgemäßes Gargerät 41 dargestellt, das eine Trägerstruktur 43 aufweist, die im Querschnitt im Wesentlichen U-förmig ausgebildet ist. In einem Freiraum 45 der Trägerstruktur 43 ist der erfindungsgemäße Behälter 1 angeordnet, wie in den Fig. 2 und 3 gezeigt ist.

Wie insbesondere in Fig. 4 ersichtlich ist, liegt die im Bodenbereich 3 vorzusehende Öffnung 13 im Übergangsbereich der Stirnwand 7 und des Bodenbereichs 3 des Behälters 1. Wie außerdem insbesondere in Fig. 4 ersichtlich ist, ist an der Öffnung 13 ein Leitungssystem 21 angeschlossen, das zumindest im ersten Leitungsbereich (23, 25) koaxial zur Schwenkachse S liegt.

In Fig. 5 sind das Leitungssystem mit einem Verschließmechanismus 23 an der Öffnung 13, das daran anschließende Schlauchstück 21 sowie ein Auffangbehälter 47 dargestellt, an dem ein Leitungssystem 1 zu einem Abflußkanal 53 führt. Die Pfeile F verdeutlichen die Abflußströmung der aus dem Behälter 1 abzulassenden Flüssigkeit 55.

Fig. 6 zeigt einen Verschließmechanismus 23 mit einem Eingangsanschluß 61, der an dem Randbereich 63 der Öffnung 13 angeschweißt ist. Der Verschließmechanismus 23 umfaßt einen Zylinder 65, der einstückig mit dem Eingangsanschluß 61 ausgebildet ist. Der mit der Öffnung 13 fluidal verbundene Zylinder 65 erstreckt sich im wesentlichen parallel zum Bodenbereich 3 des wannenartigen Behälters. In dem Zylinder 65 ist ein Kolben 67 gleitbar gelagert, der derart bemessen ist, daß die Eintrittsöffnung 71 am Zylinder 65 verschließbar ist.

An einem Ende des Kolbens 67 ist eine Kolbenstange 73 befestigt, die sich in Längsrichtung Z durch ein Loch 75 in einem Deckel 77 hindurch erstreckt, der den Zylinder 65 auf einer Seite abschließt. Die Kolbenstange 73 wirkt mit einem Antriebsschaft 79 zusammen, der sich koaxial zur Längsachse (Z) des Zylinders 65 erstreckt. Der Antriebsschaft 79 ist an der Kolbenstange 73 befestigt und wird von einem durch einen Elektromotor 81 betriebenen Bewegungswandler 83 längs der Richtung Z vor- und zurückbewegt.

Sowohl der Deckel als auch der Kolben weisen O-Ring-Dichtungsaussparungen auf, damit Flüssigkeit und/oder Schmutz nicht in den kolbenstangenseitigen Bereich des Zylinders 65 gelangen.

Mit dem sich weitenden Übergangsbereich 84 von Kolbenstange 73 und Antriebsschaft 79 wirkt ein Rollsensor 85 berührend zusammen, der die in Fig. 6 dargestellte geschlossene Stellung des Kolbens 67 detektiert. Wird der Kolben 67 geöffnet, so wird der Rollsensor 85 in eine andere Stellung verrrückt, die andeutet, daß sich der Kolben in einer der offenen Stellungen befindet.

Um die geschlossene Stellung des Kolbens eindeutig zu definieren, sind auf der der Kolbenstange 73 abgewandten Seite des Kolbens 77 Anschläge 87 vorgesehen, die als in den Zylinder eingeschraubte Bolzen ausgeführt sind. In der geschlossenen Stellung stößt der Kolben 67 an die Anschläge 87.

Der Verschließmechanismus 23 hat einen Auslaß 89, über den Flüssigkeit bei geöffneter Stellung des Kolbens 67 in das Schlauchsystem 21 fließen kann. Der Schlauch 21 ist über den Auslaß 89 gezogen und mittels der Schlauchklemme 27 befestigt. Um den Montagebereich sowie den Querschnitt des Schlauchs gegenüber dem Zylinder 65 nicht größer auszugestalten, ist eine Hülse 93 in den Auslaß 89 eingesteckt und mittels der Anschlagschrauben 87 an dem Auslaß befestigt.

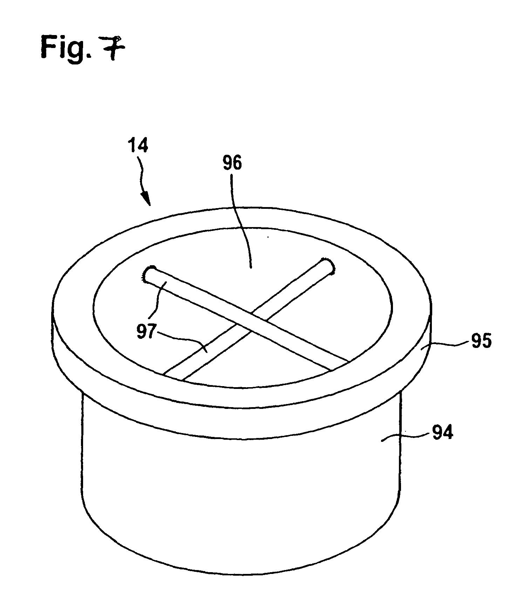

In Fig. 7 ist der grillartige Filter 14 dargestellt, der einen zylindrischen Grundkörper 94 aufweist, der in den Durchlaß an der Öffnung 13 im Bodenbereich 3 des Behälters 1 paßt. Um die Position des Filters in den Durchlaß genau festlegen zu können, weist er einen vorstehenden Rand 95 auf, der im montierten Zustand mit einer an der Innenseite des Eingangsanschlusses 61 des Verschließmechanismus 23 (siehe Fig. 6) ausgebildeten Schalter zusammenpaßt. Der Filter 14 hat eine Durchlaßöffnung 96, deren ungehinderter Durchlauf durch zwei zueinander senkrechte mit dem Grundkörper 94 verschweißten Stäbe 97 versperrt ist. Die Stäbe 97 sind im Bereich des oberen Rands 95 angeordnet.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Behälter
- 3: Bodenbereich
- 5: Seitenwände
- 6: Rückwand
- 7: Stirnwand
- 8: trichterförmiger Abschnitt
- 9: Mittelfalz
- 11: Ausgußschnabel
- 13: Öffnung
- 14: Filter
- 15: Lageraufnahmen
- 21: Leitungssystem
- 23: Verschließmechanismus
- 25: Schlauch
- 27: Schlauchklemme
- 31: Zapfen
- 33: verlängernder Abschnitt
- 35: Schlauchschelle
- 41: Gargerät
- 43: Trägerstruktur
- 45: Freiraum
- 47: Auffangbehälter
- 51: Leitungssystem
- 53: Abflußkanal
- 55: abzulassende Flüssigkeit
- 61: Eingangsanschluß
- 63: Randbereich
- 65: Zylinder
- 67: Kolben
- 71: Eintrittsöffnung
- 73: Kolbenstange
- 77: Deckel
- 79: Antriebsschaft
- 81: Elektromotor
- 83: Bewegungswandler
- 84: Übergangsbereich
- 85: Rollsensor
- 87: Anschläge
- 89: Auslaß
- 93: Hülse
- 94: Grundkörper
- 95: vorstehender Rand
- 96: Durchlaßöffnung
- 97: Stäbe
- **a**: Gargerät
- **b**: Trägerblock
- **c**: Aussparung
- **d**: Drehachse
- **e**: wannenartiger Behälter
- **f**: offene obere Seite
- **g**: Boden bereich
- **h**: Vorderseite
- **k**: Reinigungswasser
- **m**: Trittrost
- **n**: Kanal
- **o**: Pfeil
- **p**: Boden

## Patentansprüche

1. Gargerät (41) mit einem wannenartigen Behälter, insbesondere Tiegel, zum Aufnehmen und Zubereiten, insbesondere Garen, von Speisen, umfassend einen Bodenbereich (3), eine Wand, eine dem Bodenbereich (3) gegenüberliegende, offene Seite, die gegebenenfalls von einem Deckel verschließbar ist, eine Öffnung (13), die am Bodenbereich (3) derart ausgebildet ist, daß eine in dem Behälter (1) fließfähige Substanz über die Öffnung (13) abfließen kann, und einen Verschließmechanismus (23), durch den die Öffnung (13) zumindest teilweise freigebbar oder verschließbar ist, wobei eine Auffang- und Sammeleinrichtung für die abgeflossene Substanz unterhalb des Behälters (1) angeordnet ist, der mit der Auffang- und Sammeleinrichtung über eine Leitung fluidal gekoppelt ist, **dadurch gekennzeichnet, daß** die Leitung im wesentlichen koaxial zu einer Schwenkachse des Behälters (1) liegt.

2. Gargerät nach Anspruch 1, **dadurch gekennzeichnet, daß**
der Behälter (1) um eine Schwenkachse kippbar gelagert ist, wobei die Öffnung (13) benachbart der Schwenkachse angeordnet ist.

3. Gargerät nach Anspruch 1 oder 2, **dadurch gekennzeichnet, daß**
an der Öffnung (13) ein Filter (14) vorgesehen ist, der insbesondere dem Verschließmechanismus (23) in Abfußrichtung vorgeschaltet ist.

4. Gargerät nach Anspruch 3, **dadurch gekennzeichnet, daß**
der Filter (14) als Grill ausgeführt ist, der wenigstens zwei Stäbe (97) umfaßt, die in einem Winkel, vorzugsweise einem rechten Winkel, zueinander angeordnet sind.

5. Gargerät nach einem der Ansprüche 1 bis 4, **dadurch gekennzeichnet, daß**
ein Sensor (85) vorgesehen ist, der zumindest die geschlossene Stellung des Verschließmechanismus (23) detektiert.

6. Gargerät nach einem der Ansprüche 1 bis 5, **dadurch gekennzeichnet, daß**
eine Einrichtung zum Steuern und/oder Regeln des Verschließmechanismus vorgesehen ist, die derart ausgelegt ist, daß der Verschließmechanismus (23) die Öffnung (13) während eines Garvorgangs in dem Behälter (1) geschlossen hält und/oder die Öffnung (13) zur Reinigung des Behälters (1) zumindest zeitweise und zumindest teilweise freigibt.

7. Gargerät nach einem der Ansprüche 1 bis 6, **dadurch gekennzeichnet, daß**
eine Einrichtung zum Regeln der Menge einer fließfähigen Substanz in dem Behälter (1) vorgesehen ist, welche Einrichtung den von dem Verschließmechanismus (23) eingestellten Abfließquerschnitt derart einstellt, daß eine gewünschte Menge der fließfähigen Substanz in dem Behälter (1) enthalten ist.

8. Gargerät nach einem der Ansprüche 1 bis 7, **dadurch gekennzeichnet, daß**
der Verschließmechanismus (23) einen verschiebbaren Kolben (67) aufweist, der von einer Antriebseinrichtung in eine Durchflußstellung, in der eine fließfähige Substanz durch die Öffnung (13) abfließen kann, und in eine Schließstellung verbringbar ist, in welcher der Öffnungsquerschnitt von dem Kolben (67) dichtend bedeckt ist.

9. Gargerät nach Anspruch 8, **dadurch gekennzeichnet, daß**
die Antriebseinrichtung, insbesondere eine Schraubenanordnung, eine Rotationsbewegung in eine Translationsbewegung zum Stellen des Kolbens (67) umwandeln kann, wobei insbesondere ein Elektromotor die Rotationsbewegung erzeugt.

10. Gargerät nach einem der Ansprüche 1 bis 9, **dadurch gekennzeichnet, daß**
an die Öffnung (13) eine Leitung angeschlossen ist, die in ein externes Ableitungssystem oder in eine separate Auffang- oder Sammeleinrichtung mündet, die insbesondere als Ablöschkasten ausgeführt ist.

11. Gargerät nach einem der Ansprüche 1 bis 10, **dadurch gekennzeichnet, daß**
der Behälter ein Ausgußmundstück aufweist, das an einem Rand der Behälterwand angeordnet ist, der insbesondere proximal zu einer Schwenkachse liegt, um die der Behälter (1) kippbar ist.

12. Gargerät nach einem der Ansprüche 1 bis 11, **dadurch gekennzeichnet, daß**
der Behälter kippbar an einem Träger des Gargeräts (41) gelagert ist.

## Claims

1. A cooking appliance (41) having a container in the form of a trough, particularly a pan, to receive and for the preparation, particularly cooking, of food, comprising a bottom zone (3), a wall, an open side which is situated opposite the bottom zone (3) and which may be closable by a cover, an opening (13) so formed on the bottom zone (3) that a flowable substance in the container (1) can flow off via the opening (13), and a closure mechanism (23) by means of which the opening (13) is at least partially releasable or closable, a trapping and collecting device for the substance that has flown off being disposed beneath the container (1) and being coupled in fluid relationship with the trapping and collecting device via a conduit, **characterised in that** the conduit is situated substantially co-axially to a pivot axis of the container (1).

2. A cooking appliance according to claim 1, **characterised in that** the container (1) is mounted to tip about a pivot axis, the opening (13) being disposed in the vicinity of the pivot axis.

3. A cooking appliance according to claim 1 or 2, **characterised in that** a filter (14) is provided at the opening (13) and, in particular, is disposed upstream of the closure mechanism (23) in the outflow direction.

4. A cooking appliance according to claim 3, **characterised in that** the filter (14) is constructed as a grill comprising at least two rods (97) disposed at an angle to one another, preferably a right angle.

5. A cooking appliance according to any one of claims 1 to 4, **characterised in that** a sensor (85) is provided with detects at least the closed position of the closure mechanism (23).

6. A cooking appliance according to any one of claims 1 to 5, **characterised in that** a device for open and/or closed loop control of the closure mechanism is provided, such device being so designed that the closure mechanism (23) keeps the opening (13) closed during a cooking operation in the container (1) and/or at least periodically and at least partially releases the opening (13) for cleaning of the container (1).

7. A cooking appliance according to any one of claims 1 to 6, **characterised in that** a device for controlling the quantity of a flowable substance in the container (1) is provided, which device so adjusts the outflow cross-section set by the closure mechanism (23) that a required quantity of the flowable substance is contained in the container (1).

8. A cooking appliance according to any one of claims 1 to 7, **characterised in that** the closure mechanism (23) has a movable piston (67) which can be brought by a drive device into a throughflow position in which a flowable substance can flow off through the opening (13), and into a closed position in which the opening cross-section is sealingly covered by the piston (67).

9. A cooking appliance according to claim 8, **characterised in that** the drive device, particularly a screw arrangement, can convert a rotary movement into a translatory movement for the purpose of moving the piston (67), an electric motor in particular producing the rotary movement.

10. A cooking appliance according to any one of claims 1 to 9, **characterised in that** a conduit is connected to the opening (13) and leads into an external discharge system or into a separate trapping or collecting device which in particular is constructed as a quenching box.

11. A cooking appliance according to any one of claims 1 to 10, **characterised in that** the container has a pouring orifice disposed at one edge of the container wall situated in particular in the vicinity of a pivot axis about which the container (1) is tippable.

12. A cooking appliance according to any one of claims 1 to 11, **characterised in that** the container is mounted tippably on a carrier of the cooking appliance (41).

## Revendications

1. Appareil de cuisson (41) avec un récipient du genre d'une auge, en particulier un creuset, pour recevoir et préparer, en particulier les produits à cuire, des aliments, comprenant une zone de fond (3), une paroi, une face ouverte, opposée à la zone de fond (3), face qui, le cas échéant, peut être fermée par un couvercle, une ouverture (13), réalisée sur la zone de fond (3), de manière qu'une substance fluide, se trouvant dans le récipient (1), puisse s'évacuer par l'ouverture (13), et un mécanisme de fermeture (23) au moyen duquel l'ouverture (13) peut être ou libérée ou libérée au moins partiellement, un dispositif de captage et de collecte pour la substance évacuée étant disposé au-dessous du récipient (1), couplé fluidiquement par une conduite au dispositif de captage et de collecte, **caractérisé en ce que** la conduite est placée sensiblement coaxialement par rapport à un axe de pivotement du récipient (1).

2. Appareil de cuisson selon la revendication 1, **caractérisé en ce que** le récipient (1) est monté de façon basculante autour d'un axe de pivotement, l'ouverture (13) étant disposée au voisinage de l'axe de pivotement.

3. Appareil de cuisson selon la revendication 1 ou 2, **caractérisé en ce que**, sur l'ouverture (13) est prévu un filtre (14), branché en amont dans le sens d'évacuation, en particulier en amont du mécanisme de fermeture (23).

4. Appareil de cuisson selon la revendication 3, **caractérisé en ce que** le filtre (14) est réalisé sous la forme de grille, comprenant au moins deux barreaux (97) disposés sous un angle l'un par rapport à l'autre, de préférence un angle droit.

5. Appareil de cuisson selon l'une des revendications 1 à 4, **caractérisé en ce qu'**un capteur (85) est prévu, détectant au moins la position fermée du mécanisme de fermeture (23).

6. Appareil de cuisson selon l'une des revendications 1 à 5, **caractérisé en ce qu'**un dispositif de commande et/ou de régulation du mécanisme de fermeture est prévu, conçu de manière que le mécanisme de fermeture (23) maintienne fermée l'ouverture (13) pendant un processus de cuisson se déroulant dans le récipient (1) et/ou libère au moins par moments et au moins partiellement l'ouverture (13), dans le but de nettoyer le récipient (3).

7. Appareil de cuisson selon l'une des revendications 1 à 6, **caractérisé en ce qu'**un dispositif de régulation de la quantité d'une substance fluide dans le récipient (1) est prévu, dispositif réglant la valeur de la section transversale d'évacuation, réglée par le mécanisme de fermeture (23), de manière qu'une quantité souhaitée de substance fluide soit contenue dans le récipient (1).

8. Appareil de cuisson selon l'une des revendications 1 à 7, **caractérisé en ce que** le mécanisme de fermeture (23) présente un piston (67) déplaçable, qui, par un dispositif d'entraînement, peut être déplacé en une position de passage, à laquelle une substance fluide peut s'évacuer par l'ouverture (13), et en une position de fermeture, à laquelle la section transversale est couverte, de façon étanche, par le piston (67).

9. Appareil de cuisson selon la revendication 8, **caractérisé en ce que** le dispositif d'entraînement, en particulier un dispositif à vis, peut convertir un mouvement rotatif en un mouvement de translation, dans le but de manoeuvrer et de régler le piston (7), sachant qu'en particulier, un moteur électrique produit le mouvement rotatif.

10. Appareil de cuisson selon l'une des revendications 1 à 9, **caractérisé en ce qu'**à l'ouverture (13) est raccordée une conduite qui débouche en un système d'évacuation externe ou dans un dispositif de captage ou de collecte séparé, réalisé en particulier sous forme de caisse d'extinction.

11. Appareil de cuisson selon l'une des revendications 1 à 10, **caractérisé en ce que** le récipient présente une pièce d'embouchure de coulée, disposée sur un bord de la paroi de récipient, située en particulier de façon proximale par rapport à un axe de pivotement autour duquel le récipient 1 est susceptible de basculer.

12. Appareil de cuisson selon l'une des revendications 1 à 11, **caractérisé en ce que** le récipient est monté de façon à pouvoir basculer sur un support de l'appareil de cuisson (41).
